# EUROPEAN PATENT APPLICATION

(11) **EP 4 701 211 A1**
(43) Date of publication of application: **25.02.2026**
(21) Application number: 25174577.4
(22) Date of filing: 06.05.2025
(51) Int. Cl.: H04N 23/20, B60R 1/20, H04N 23/667

(54) **IMAGE RECORDING SYSTEM, VEHICLE, PROGRAM, AND IMAGE RECORDING METHOD OF IMAGE RECORDING SYSTEM**

(30) Priority: 22.08.2024 JP 2024140756
(71) Applicant: TOYOTA JIDOSHA KABUSHIKI KAISHA, Toyota-shi, Aichi-ken 471-8571 (JP)
(72) Inventor: TAKE, Naoya, Toyota-shi, 471-8571 (JP)
(74) Representative: D Young & Co LLP

(57) **Abstract**

An image recording system includes an image recording unit that records either an infrared image captured by an infrared camera or a visible light image captured by a visible light camera. The image recording system switches a recording target of the image recording unit from the visible light image to the infrared image when illuminance around the vehicle detected by an illuminance sensor of the vehicle or illuminance of the visible light image becomes less than an infrared switching threshold value in a case where the recording target of the image recording unit is the visible light image.

## Description

### CROSS REFERENCE TO RELATED APPLICATIONS

This application is based upon and claims the benefit of priority from Japanese Patent Application No. 2024-140756, filed on August 22, 2024, the entire contents of which are incorporated herein by reference.

### TECHNICAL FIELD

The present disclosure relates to an image recording system mounted on a vehicle, a vehicle, a program, and an image recording method of the image recording system.

### BACKGROUND

As a technical document relating to an image recording system mounted on a vehicle, Japanese Unexamined Patent Application Publication No. 2022-35319 is known in the related art. This publication discloses a driver assistance system with two functions. One is a function of displaying an image with a color tone suitable for monitoring the surroundings of the vehicle. The other is a function of recording an image with a color tone suitable for a drive recorder. This driver assistance system determines whether it is nighttime or daytime based on the illuminance around the vehicle. Then, the driver assistance system switches the recording target so as to record an image with a color tone suitable for monitoring the surroundings of the vehicle during the daytime and record an image with a color tone suitable for the drive recorder at nighttime.

### SUMMARY

However, in the conventional system described above, the determination of whether it is nighttime or daytime is made only based on the illuminance. Therefore, there is a possibility that erroneous determination may occur when the vehicle enters a low-illuminance environment such as a tunnel. As a result, there has been a problem that correction is applied as an image for nighttime even though it is daytime. Further, in the case of a system that uses a visible light camera during the daytime and an infrared camera at nighttime, there is also a problem that visible light images and infrared images are mixed when passing through a tunnel.

One aspect of the present disclosure is an image recording system including an infrared camera mounted on a vehicle and configured to capture an image of a surrounding environment of the vehicle using infrared light, a visible light camera mounted on the vehicle and configured to capture an image of the surrounding environment of the vehicle using visible light, and an image recording unit configured to record either an infrared image captured by the infrared camera or a visible light image captured by the visible light camera. The image recording system switches a recording target of the image recording unit from the visible light image to the infrared image when illuminance around the vehicle detected by an illuminance sensor of the vehicle or illuminance of the visible light image becomes less than an infrared switching threshold value in a case where the recording target of the image recording unit is the visible light image. Even if the illuminance around the vehicle or the illuminance of the visible light image becomes less than the infrared switching threshold value, the image recording system does not switch the recording target of the image recording unit from the visible light image to the infrared image when a preset switching restriction condition is satisfied based on at least one of a current time, position information and map information of the vehicle, a temporal change in the illuminance, a temporal change in the illuminance, and an image recognition result of the visible light image.

In the image recording system according to one aspect of the present disclosure, even when the illuminance around the vehicle or the illuminance of the visible light image becomes less than the infrared switching threshold value, the recording target of the image recording unit is not switched from the visible light image to the infrared image when the switching restriction condition is satisfied based on at least one of the current time, the position information and the map information of the vehicle, the temporal change in the illuminance, the temporal change in the illuminance, and the image recognition result of the visible light image. Accordingly, the image recording system can suppress unnecessary switching of the recording target of the image recording unit.

In the image recording system according to one aspect of the present disclosure, the switching restriction condition may be satisfied when the current time is before a preset sunset time, or when the current time is included in a preset daytime period.

In the image recording system according to one aspect of the present disclosure, the map information may include a low-illuminance section including a tunnel, and the switching restriction condition may be satisfied when it is determined that the vehicle has entered the low-illuminance section based on the position information and the map information of the vehicle.

In the image recording system according to one aspect of the present disclosure, the switching restriction condition may be satisfied when it is determined that the vehicle has entered the low-illuminance section based on the temporal change in the illuminance or the temporal change in the illuminance.

In the image recording system according to one aspect of the present disclosure, the switching restriction condition may be satisfied when it is determined that the vehicle has entered the low-illuminance section based on the image recognition result of the visible light image.

In the image recording system according to one aspect of the present disclosure, the visible light camera may include a first front camera configured to capture an image of a front side of the vehicle and a first rear camera configured to capture an image of a rear side of the vehicle. Further, in the image recording system, the switching restriction condition may be satisfied when illuminance of a front visible light image captured by the first front camera is smaller than illuminance of a rear visible light image captured by the first rear camera, and a difference between the illuminance of the front visible light image and the illuminance of the rear visible light image is equal to or greater than a low-illuminance section entry threshold value.

Another aspect of the present disclosure is a vehicle including an infrared camera configured to capture an image of a surrounding environment using infrared light, a visible light camera configured to capture an image of the surrounding environment using visible light, and an image recording unit configured to record either an infrared image captured by the infrared camera or a visible light image captured by the visible light camera. The vehicle switches a recording target of the image recording unit from the visible light image to the infrared image when illuminance around the vehicle detected by an illuminance sensor of the vehicle or illuminance of the visible light image becomes less than an infrared switching threshold value in a case where the recording target of the image recording unit is the visible light image. Even if the illuminance around the vehicle or the illuminance of the visible light image becomes less than the infrared switching threshold value, the vehicle does not switch the recording target of the image recording unit from the visible light image to the infrared image when a preset switching restriction condition is satisfied based on at least one of a current time, position information and map information of the vehicle, a temporal change in the illuminance, a temporal change in the illuminance, and an image recognition result of the visible light image.

According to the vehicle of another aspect of the present disclosure, even when the illuminance around the vehicle or the illuminance of the visible light image becomes less than the infrared switching threshold value, the recording target of the image recording unit is not switched from the visible light image to the infrared image when the switching restriction condition is satisfied based on at least one of the current time, the position information and the map information of the vehicle, the temporal change in the illuminance, the temporal change in the illuminance, and the image recognition result of the visible light image. Accordingly, the vehicle can suppress unnecessary switching of the recording target of the image recording unit.

Still another aspect of the present disclosure is a program that causes a computer mounted on a vehicle to operate, the vehicle including an infrared camera configured to capture an image of a surrounding environment using infrared light, a visible light camera configured to capture an image of the surrounding environment using visible light, and an image recording unit configured to record either an infrared image captured by the infrared camera or a visible light image captured by the visible light camera. The program causes the computer to switch a recording target of the image recording unit from the visible light image to the infrared image when illuminance around the vehicle detected by an illuminance sensor of the vehicle or illuminance of the visible light image becomes less than an infrared switching threshold value in a case where the recording target of the image recording unit is the visible light image. Even if the illuminance around the vehicle or the illuminance of the visible light image becomes less than the infrared switching threshold value, the program causes the computer not to switch the recording target of the image recording unit from the visible light image to the infrared image when a preset switching restriction condition is satisfied based on at least one of a current time, position information and map information of the vehicle, a temporal change in the illuminance, a temporal change in the illuminance, and an image recognition result of the visible light image.

According to the program of still another aspect of the present disclosure, even when the illuminance around the vehicle or the illuminance of the visible light image becomes less than the infrared switching threshold value, the recording target of the image recording unit is not switched from the visible light image to the infrared image when the switching restriction condition is satisfied based on at least one of the current time, the position information and the map information of the vehicle, the temporal change in the illuminance, the temporal change in the illuminance, and the image recognition result of the visible light image. Accordingly, the program can suppress unnecessary switching of the recording target of the image recording unit.

Still another aspect of the present disclosure is an image recording method of an image recording system including an infrared camera mounted on a vehicle and configured to capture an image of a surrounding environment of the vehicle using infrared light, a visible light camera mounted on the vehicle and configured to capture an image of the surrounding environment of the vehicle using visible light, and an image recording unit configured to record either an infrared image captured by the infrared camera or a visible light image captured by the visible light camera. In the image recording method of the image recording system, the image recording system switches a recording target of the image recording unit from the visible light image to the infrared image when illuminance around the vehicle detected by an illuminance sensor of the vehicle or illuminance of the visible light image becomes less than an infrared switching threshold value in a case where the recording target of the image recording unit is the visible light image. In the image recording method of the image recording system, even if the illuminance around the vehicle or the illuminance of the visible light image becomes less than the infrared switching threshold value, the image recording system does not switch the recording target of the image recording unit from the visible light image to the infrared image when a preset switching restriction condition is satisfied based on at least one of a current time, position information and map information of the vehicle, a temporal change in the illuminance, a temporal change in the illuminance, and an image recognition result of the visible light image.

According to the image recording method of the image recording system of still another aspect of the present disclosure, even when the illuminance around the vehicle or the illuminance of the visible light image becomes less than the infrared switching threshold value, the recording target of the image recording unit is not switched from the visible light image to the infrared image when the switching restriction condition is satisfied based on at least one of the current time, the position information and the map information of the vehicle, the temporal change in the illuminance, the temporal change in the illuminance, and the image recognition result of the visible light image. Accordingly, the image recording method of the image recording system can suppress unnecessary switching of the recording target of the image recording unit.

According to each aspect of the present disclosure, unnecessary switching of the recording target of the image recording unit can be suppressed.

### BRIEF DESCRIPTION OF THE DRAWINGS

FIG. 1 is a block diagram illustrating an image recording system according to an embodiment.
FIG. 2 is a flowchart illustrating an example of an image switching process.
FIG. 3A is a flowchart illustrating a first example of a switching restriction condition determination process.
FIG. 3B is a flowchart illustrating a second example of the switching restriction condition determination process.
FIG. 4A is a flowchart illustrating a third example of the switching restriction condition determination process.
FIG. 4B is a flowchart illustrating a fourth example of the switching restriction condition determination process.
FIG. 5 is a flowchart illustrating a fifth example of the switching restriction condition determination process.

### DETAILED DESCRIPTION

Hereinafter, embodiments of the present disclosure will be described with reference to the drawings.

### [Configuration of Image Recording System]

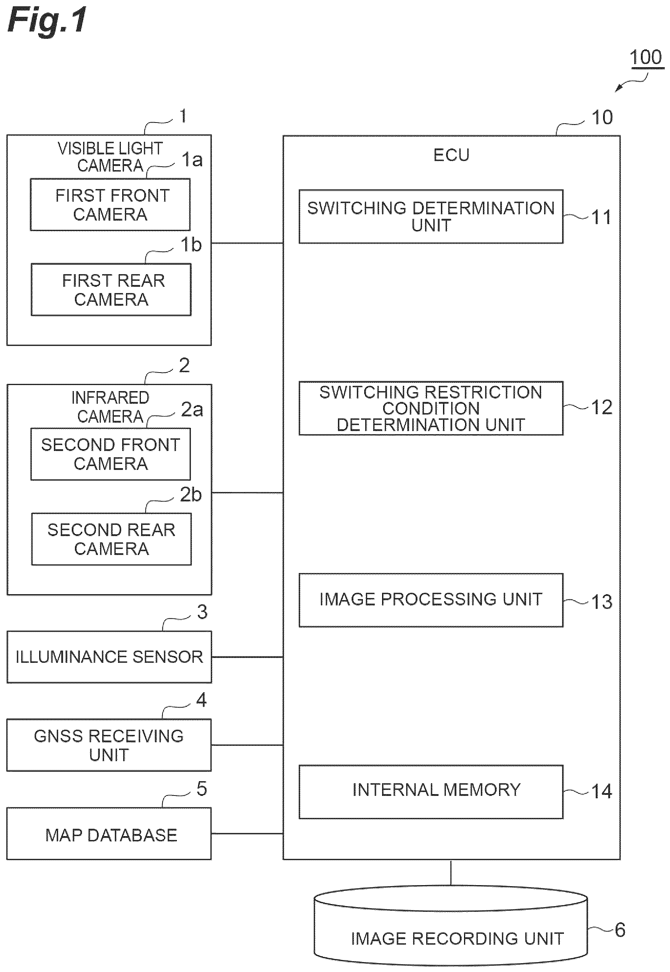

FIG. 1 is a block diagram illustrating an image recording system 100 according to an embodiment. The image recording system 100 illustrated in FIG. 1 is a system mounted on a vehicle. This system captures an image of a surrounding environment of the vehicle using a visible light camera 1 and an infrared camera 2, and records the image in an image recording unit 6. The image recording system 100 records only one of a visible light image captured by the visible light camera 1 and an infrared image captured by the infrared camera 2.

The image recording system 100 is basically assumed to record a visible light image during the daytime and record an infrared image at nighttime. The image recording unit 6 performs recording, for example, as video which is data of time-series images. The image recording unit 6 may record the visible light image or the infrared image as continuous still images. The image recording system 100 may be a so-called drive recorder system.

As illustrated in FIG. 1, the image recording system 100 includes an ECU (Electronic Control Unit) 10 that comprehensively manages the system. The ECU 10 is an electronic control unit (computer) having a CPU (Central Processing Unit) and an internal memory 14. The internal memory 14 includes, for example, a ROM (Read Only Memory), a RAM (Random Access Memory), an EEPROM (Electrically Erasable Programmable Read-Only Memory), and the like. In the ECU 10, for example, various functions are realized by executing a program stored in a storage unit by the CPU. The ECU 10 may be composed of a plurality of electronic units.

The ECU 10 is connected to the visible light camera 1, the infrared camera 2, an illuminance sensor 3, a GNSS (Global Navigation Satellite System) receiving unit 4, a map database 5, and the image recording unit 6.

The visible light camera 1 is a camera that captures an image of the surrounding environment of the vehicle using visible light. As the visible light camera 1, for example, an image sensor such as a CCD (Charge Coupled Device) or a CIS (CMOS Image Sensor) can be adopted. The visible light image is an image captured using visible light. The visible light image includes color information (such as RGB information). Although a wavelength range of the visible light image is not particularly limited, an aspect in which only a part of the wavelength range of visible light is used may be adopted.

The visible light camera 1 includes a first front camera 1a and a first rear camera 1b. The first front camera 1a is a camera provided on a front side of the vehicle and configured to capture an image of the front of the vehicle using visible light. A visible light image captured by the first front camera 1a is referred to as a front visible light image. The first rear camera 1b is a camera provided on a rear side of the vehicle and configured to capture an image of the rear of the vehicle using visible light. A visible light image captured by the first rear camera 1b is referred to as a rear visible light image. The visible-light camera 1 may alternatively include only the first front camera 1a.

The infrared camera 2 is a camera that captures an image of the surrounding environment of the vehicle using infrared light. The infrared camera 2 includes an infrared light emitting unit and an infrared light receiving unit, and captures an infrared image by receiving infrared light that is emitted by the infrared-light emitting unit and reflected from an object. The infrared image is not affected by a state of light (illuminance or darkness) and can capture a clear image even at nighttime or in a dark place.

The infrared camera 2 includes a second front camera 2a and a second rear camera 2b. The second front camera 2a is a camera provided on the front side of the vehicle and configured to capture an image of the front of the vehicle using infrared light. An infrared image captured by the second front camera 2a is referred to as a front infrared image. The second rear camera 2b is a camera provided on the rear side of the vehicle and configured to capture an image of the rear of the vehicle using infrared light. An infrared image captured by the second rear camera 2b is referred to as a rear infrared image. Note that when the visible light camera 1 includes only the first front camera 1a, the infrared camera 2 may also include only the second front camera 2a.

The infrared camera 2 may be an RGB-IR camera integrated with the visible light camera 1. The RGB-IR camera includes an RGB sensor and an IR sensor in a single camera unit, and can acquire a visible light image and an infrared image simultaneously.

The illuminance sensor 3 is a sensor for detecting illuminance around the vehicle. The illuminance sensor 3 is disposed outside the vehicle and detects intensity of ambient light. The illuminance sensor 3 is configured using a light detection element such as a photodiode or a phototransistor, for example, and outputs an electric signal to the ECU 10 according to the amount of ambient light.

The GNSS receiving unit 4 is a device for acquiring position information of the vehicle. The GNSS receiving unit 4 measures the position of the vehicle (for example, latitude and longitude of the vehicle) by receiving signals from positioning satellites. The GNSS receiving unit 4 may be a part of a GPS (Global Positioning System) system. The GNSS receiving unit 4 transmits the measured position information of the vehicle to the ECU 10.

The map database 5 is a database that stores map information. The map database 5 is formed, for example, in a storage device such as an HDD (Hard Disk Drive) mounted on the vehicle. Note that the map database 5 may be formed in a server communicable with the vehicle.

The map information includes information on low-illuminance sections such as tunnels. The low-illuminance section is a section with low illuminance where the illuminance around the vehicle may become less than the infrared switching threshold value. The low-illuminance section may include indoor parking lots and other indoor sections. The low-illuminance section may include mountain roads shaded by many trees, or the like. The map information may include road position information, road shape information (for example, type of curve or straight section, curvature of curve, etc.), position information of intersections and branch points, position information of structures, and the like.

The image recording unit 6 is a database for recording images captured of the surrounding environment of the vehicle. The image recording unit 6 has a function of saving, as a recording target, the visible light image acquired from the visible light camera 1 or the infrared image acquired from the infrared camera 2. The image recording unit 6 is configured using a recording medium such as a hard disk drive (HDD) or a solid state drive (SSD), for example. The image recording unit 6 can store a large amount of data over a long period of time. The image recording unit 6 may be the internal memory of the ECU 10. As the internal memory, an eMMC (Embedded Multi Media Card) or the like can be used.

Next, a functional configuration of the ECU 10 will be described. As illustrated in FIG. 1, the ECU 10 includes a switching determination unit 11, a switching restriction condition determination unit 12, an image processing unit 13, and the internal memory 14.

The switching determination unit 11 determines whether or not the illuminance around the vehicle detected by the illuminance sensor 3 of the vehicle is less than the infrared switching threshold value. The infrared switching threshold value is a threshold value used for determination to switch the recording target of the image recording unit 6 from the visible light image to the infrared image. The infrared switching threshold value is set, for example, such that the recording target is switched from the visible light image to the infrared image when it becomes nighttime. A numerical value of the infrared switching threshold value is not particularly limited.

The switching determination unit 11 may perform the determination using illuminance of the visible light image captured by the visible light camera 1 instead of the illuminance around the vehicle. As the illuminance of the visible light image, illuminance of the front visible light image from the first front camera 1a may be used, illuminance of the rear visible light image from the first rear camera 1b may be used, or an average value of the illuminance of the front visible light image and the illuminance of the rear visible light image may be used. The illuminance of the visible light image may be an average value or a median value of illuminance in the entire image, or may be an average value or a median value of illuminance in a central portion of the visible light image. Alternatively, the illuminance as a representative value may be obtained from the visible light image by a known method.

The switching determination unit 11 determines whether or not the illuminance of the visible light image is less than the infrared switching threshold value. Note that the infrared switching threshold value at the time of determining the illuminance and the infrared switching threshold value at the time of determining the illuminance may be the same value or different values.

The switching restriction condition determination unit 12 determines whether or not a preset switching restriction condition is satisfied. The switching restriction condition is a condition for restricting switching of the recording target from the visible light image to the infrared image when the recording target of the image recording unit 6 is the visible light image. The switching restriction condition determination unit 12 determines whether or not the switching restriction condition is satisfied based on at least one of the current time, the position information of the vehicle, the map information, the temporal change in the illuminance, the temporal change in the illuminance, and the image recognition result of the visible light image.

The switching restriction condition determination unit 12 determines whether or not the switching restriction condition is satisfied based on, for example, the current time. Specifically, the switching restriction condition determination unit 12 determines whether or not the current time is before a preset sunset time, or whether or not the current time is included in a preset daytime period. The current time may be acquired from the GNSS receiving unit 4, may be acquired from a timer of the ECU 10, or may be acquired from an external server via wireless communication. The sunset time is a predicted time when the sun sets (for example, 18:00). The daytime period is a time when the sun is up (for example, from 5:00 in the morning to 18:00 in the evening). The sunset time and the daytime period are changed depending on the day or month.

The sunset time may be stored in the internal memory 14 or may be acquired from an external server via wireless communication. The sunset time may be acquired from the internal memory 14 or the external server as a time corresponding to sunset in a region where the vehicle is located, based on the position information of the vehicle. The same applies to the daytime period. The switching restriction condition determination unit 12 determines that the switching restriction condition is satisfied when the current time is before the sunset time or when the current time is included in the daytime period. Note that, instead of determining the daytime period, it may be determined that the current time is not included in a nighttime period.

The switching restriction condition determination unit 12 may determine whether or not the switching restriction condition is satisfied based on the position information of the vehicle acquired from the GNSS receiving unit 4 and the map information stored in the map database 5. The switching restriction condition determination unit 12 determines whether or not the vehicle has entered a low-illuminance section such as a tunnel or an indoor area from the position information of the vehicle and the map information. Accurate position determination becomes possible by collating with the map information. When the switching restriction condition determination unit 12 determines that the vehicle has entered the low-illuminance section, the switching restriction condition determination unit 12 determines that the switching restriction condition is satisfied.

The switching restriction condition determination unit 12 may assume that the switching restriction condition is satisfied for a certain period of time after determining that the vehicle has entered the low-illuminance section. The switching restriction condition determination unit 12 may assume that the switching restriction condition is satisfied from when it determines that the vehicle has entered the low-illuminance section until it determines that the vehicle has exited the low-illuminance section based on the position information of the vehicle and the map information.

The switching restriction condition determination unit 12 may determine whether or not the switching restriction condition is satisfied based on the temporal change in the illuminance. The switching restriction condition determination unit 12 determines that the vehicle has entered the low-illuminance section, for example, when an amount of decrease in illuminance with respect to elapsed time as the temporal change in illuminance is equal to or greater than a section entry threshold value. The section entry threshold value is a threshold value corresponding to the temporal change in illuminance when the vehicle enters the low-illuminance section. The section entry threshold value may be a threshold value whose value changes according to the vehicle speed of the vehicle. The section entry threshold value may be set to a larger value as the vehicle speed of the vehicle is higher. When the switching restriction condition determination unit 12 determines that the vehicle has entered the low-illuminance section based on the temporal change in the illuminance, the switching restriction condition determination unit 12 determines that the switching restriction condition is satisfied.

The switching restriction condition determination unit 12 may assume that the switching restriction condition is satisfied for a certain period of time after determining that the vehicle has entered the low-illuminance section. The switching restriction condition determination unit 12 may assume that the switching restriction condition is satisfied from when it determines that the vehicle has entered the low-illuminance section until it determines that the vehicle has exited the low-illuminance section based on the temporal change in illuminance. The switching restriction condition determination unit 12 determines that the vehicle has exited the low-illuminance section, for example, when an amount of increase in illuminance with respect to elapsed time as the temporal change in illuminance is equal to or greater than a section exit threshold value. The section exit threshold value is a threshold value corresponding to the temporal change in illuminance when the vehicle exits the low-illuminance section. The section exit threshold value may be a threshold value whose value changes according to the vehicle speed of the vehicle.

The switching restriction condition determination unit 12 may perform the determination of the switching restriction condition using the temporal change in the illuminance of the visible light image instead of the temporal change in the illuminance. The switching restriction condition determination unit 12 may determine that the switching restriction condition is satisfied when an amount of decrease in illuminance with respect to elapsed time as the temporal change in the illuminance of the visible light image is equal to or greater than the section entry threshold value. The switching restriction condition determination unit 12 may adopt an aspect in which, when the switching determination unit 11 determines the infrared switching using the illuminance, the switching restriction condition is determined using the temporal change in the illuminance of the visible light image. The switching restriction condition determination unit 12 may adopt an aspect in which, when the switching determination unit 11 determines the infrared switching using the illuminance, the switching restriction condition is determined using the temporal change in the illuminance.

The switching restriction condition determination unit 12 may determine whether or not the switching restriction condition is satisfied based on the image recognition result of the visible light image. The switching restriction condition determination unit 12 determines that the vehicle has entered the low-illuminance section from the visible light image using a known image recognition technique such as pattern matching, silhouette analysis, optical flow analysis, HOG (Histogram of Oriented Gradients) analysis, or a convolutional neural network (CNN) using deep learning. When the switching restriction condition determination unit 12 determines that the vehicle has entered the low-illuminance section based on the image recognition result of the visible light image, the switching restriction condition determination unit 12 determines that the switching restriction condition is satisfied.

The switching restriction condition determination unit 12 may assume that the switching restriction condition is satisfied for a certain period of time after determining that the vehicle has entered the low-illuminance section. The switching restriction condition determination unit 12 may assume that the switching restriction condition is satisfied from when it determines that the vehicle has entered the low-illuminance section until it determines that the vehicle has exited the low-illuminance section based on the image recognition result of the visible light image. Alternatively, the image recognition process may be executed by the image processing unit 13 described later. Note that the switching restriction condition determination unit 12 may adopt an aspect in which the determination of the switching restriction condition is started only when it is determined to be daytime based on the image recognition result of the visible light image.

The switching restriction condition determination unit 12 may determine whether or not the switching restriction condition is satisfied based on the illuminance of the front visible light image captured by the first front camera 1a and the illuminance of the rear visible light image captured by the first rear camera 1b. Specifically, the switching restriction condition determination unit 12 determines that the switching restriction condition is satisfied when the following condition is satisfied. The condition is that the illuminance of the front visible light image is smaller than the illuminance of the rear visible light image, and the difference between the illuminance of the front visible light image and the illuminance of the rear visible light image is equal to or greater than the low-illuminance section entry threshold value. The low-illuminance section entry threshold value is a threshold value set corresponding to entry of the vehicle into the low-illuminance section. A numerical value of the low-illuminance section entry threshold value is not particularly limited.

The switching restriction condition determination unit 12 may assume that the switching restriction condition is satisfied for a certain period of time after the illuminance of the front visible light image becomes smaller than the illuminance of the rear visible light image and the difference between the illuminance of the front visible light image and the illuminance of the rear visible light image becomes equal to or greater than the low-illuminance section entry threshold value. The switching restriction condition determination unit 12 may assume that the switching restriction condition is satisfied from when it determines that the vehicle has entered the low-illuminance section until it determines that the vehicle has exited the low-illuminance section based on the illuminance of the front visible light image and the illuminance of the rear visible light image. The switching restriction condition determination unit 12 determines that the vehicle has exited the low-illuminance section, for example, when the illuminance of the front visible light image is larger than the illuminance of the rear visible light image and the difference between the illuminance of the front visible light image and the illuminance of the rear visible light image is equal to or greater than a low-illuminance section exit threshold value. The low-illuminance section exit threshold value is a threshold value set corresponding to exit of the vehicle from the low-illuminance section.

The image processing unit 13 switches the recording target of the image recording unit 6 based on a determination result of the switching determination unit 11 and a determination result of the switching restriction condition determination unit 12. An initially set recording target is the visible light image. The image processing unit 13 switches the recording target of the image recording unit 6 from the visible light image to the infrared image when the switching determination unit 11 determines that the illuminance around the vehicle or the illuminance of the visible light image is less than the infrared switching threshold value, and the switching restriction condition determination unit 12 does not determine that the switching restriction condition is satisfied. In other words, the image processing unit 13 switches the recording target of the image recording unit 6 from the visible light image to the infrared image when both of the following two conditions are satisfied. First condition: the switching determination unit 11 determines that the illuminance around the vehicle or the illuminance of the visible light image is less than the infrared switching threshold value. Second condition: the switching restriction condition determination unit 12 does not determine that the switching restriction condition is satisfied.

Alternatively, the image processing unit 13 may select an image to be recorded by a known method. For example, when a moving object is not included in the image, the image processing unit 13 may exclude the image from the recording target.

The internal memory 14 is a recording unit in the ECU 10. The internal memory 14 stores, for example, the sunset time, the daytime period, and the like. Information indicating whether or not the switching restriction condition is satisfied may be temporarily stored in the internal memory 14.

### [Program]

A program causes the ECU 10 (computer) to function (operate) as the switching determination unit 11, the switching restriction condition determination unit 12, and the image processing unit 13 all described above. The program is provided by, for example, a non-transitory recording medium such as a ROM or a semiconductor memory. Further, the program may be provided from a network or the like via wireless communication.

### [Image Recording Method of Image Recording System]

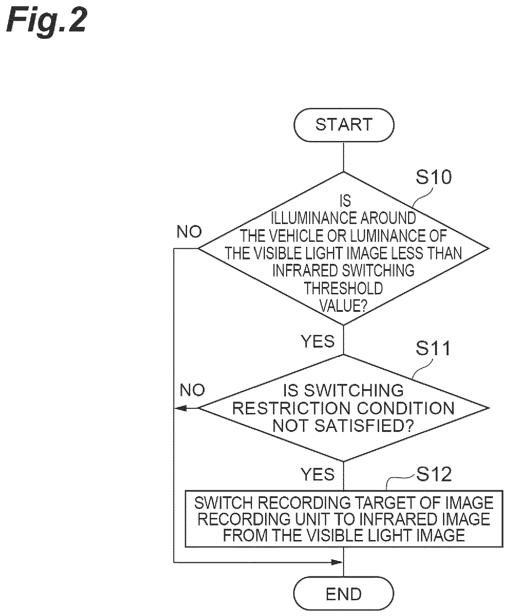

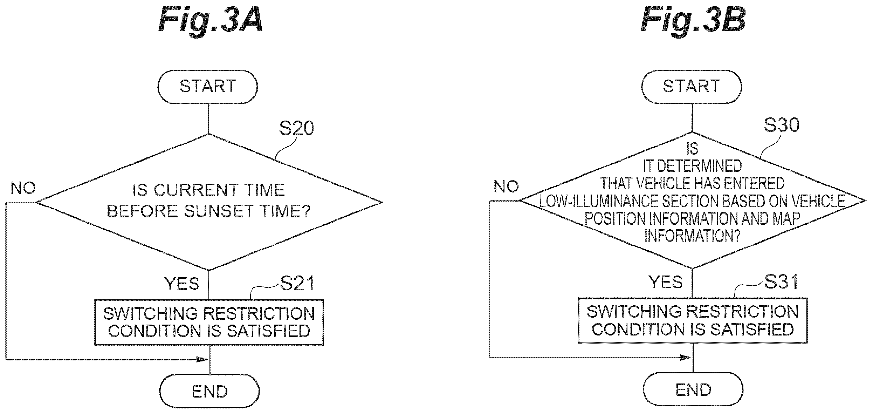

Subsequently, an image recording method of the image recording system 100 according to the present embodiment will be described with reference to the drawings. The image recording method includes, for example, the image switching process illustrated in FIG. 2 and the switching restriction condition determination process illustrated in FIGS. 3 to 5.

Here, FIG. 2 is a flowchart illustrating an example of the image switching process. The image switching process illustrated in FIG. 2 is executed when the recording target of the image recording unit 6 is the visible light image. As illustrated in FIG. 2, first, in step S10, the ECU 10 determines whether or not the illuminance around the vehicle or the illuminance of the visible light image is less than the infrared switching threshold value by the switching determination unit 11.

Specifically, the ECU 10 acquires the illuminance from the illuminance sensor 3 or the illuminance of the visible light image from the visible light camera 1, and determines whether or not the illuminance or the illuminance is less than the infrared switching threshold value. Based on this determination, it is possible to determine whether or not the surrounding environment has low illuminance. When the ECU 10 determines that the illuminance or the illuminance is less than the infrared switching threshold value, the process proceeds to step S11. When the ECU 10 does not determine that the illuminance or the illuminance is less than the infrared switching threshold value, the ECU 10 ends the image switching process.

Next, in step S11, the ECU 10 determines whether or not the switching restriction condition is satisfied by the switching restriction condition determination unit 12. The switching restriction condition determination unit 12 determines whether or not the switching restriction condition is satisfied based on the current time, the position information of the vehicle, the map information, the temporal change in the illuminance, the temporal change in the illuminance, the image recognition result of the visible light image, and the like. When the switching restriction condition is satisfied, the ECU 10 ends the image switching process. When the switching restriction condition is not satisfied, the ECU 10 proceeds to step S12.

In step S12, the ECU 10 switches the recording target of the image recording unit 6 from the visible light image to the infrared image by the image processing unit 13. The infrared image from the infrared camera 2 is recorded in the image recording unit 6.

FIG. 3A is a flowchart illustrating a first example of the switching restriction condition determination process. As illustrated in FIG. 3A, first, in step S20, the ECU 10 determines whether or not the current time is before the sunset time by the switching restriction condition determination unit 12. Specifically, the switching restriction condition determination unit 12 compares the current time acquired from the internal timer or the GNSS receiving unit 4 with a preset sunset time, and determines whether or not the current time is equal to or later than the sunset time. Note that a daytime period may be used instead of the sunset time.

When the current time is not before the sunset time, the ECU 10 ends this switching restriction condition determination process. When the current time is before the sunset time, the ECU 10 proceeds to step S21. In step S21, the ECU 10 determines that the switching restriction condition is satisfied. Thereafter, the ECU 10 ends this switching restriction condition determination process.

FIG. 3B is a flowchart illustrating a second example of the switching restriction condition determination process. As illustrated in FIG. 3B, first, in step S30, the ECU 10 determines whether or not the vehicle has entered the low-illuminance section based on the position information of the vehicle and the map information by the switching restriction condition determination unit 12. Specifically, the switching restriction condition determination unit 12 collates the position information of the vehicle acquired from the GNSS receiving unit 4 with the map information stored in the map database 5, and determines whether or not the vehicle has entered the low-illuminance section such as a tunnel or an indoor parking lot.

When the vehicle has not entered the low-illuminance section, the ECU 10 ends this switching restriction condition determination process. When the vehicle has entered the low-illuminance section, the ECU 10 proceeds to step S31. In step S31, the ECU 10 determines that the switching restriction condition is satisfied. Thereafter, the ECU 10 ends this switching restriction condition determination process. The ECU 10 may assume that the switching restriction condition is satisfied for a certain period of time after the vehicle enters the low-illuminance section.

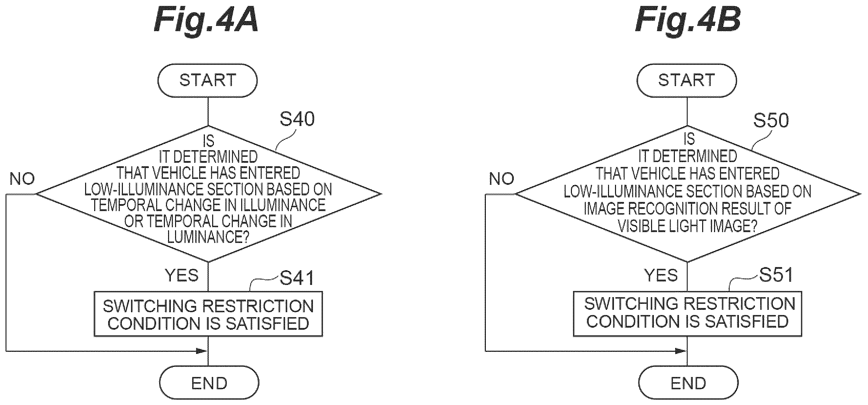

FIG. 4A is a flowchart illustrating a third example of the switching restriction condition determination process. First, in step S40, the ECU 10 determines whether or not the vehicle has entered the low-illuminance section during the daytime based on the temporal change in the illuminance or the temporal change in the illuminance by the switching restriction condition determination unit 12. Specifically, the switching restriction condition determination unit 12 analyzes the illuminance detected by the illuminance sensor 3 or the illuminance of the visible light image from the visible light camera 1 in time series, and determines that the vehicle has entered the low-illuminance section such as a tunnel or an indoor parking lot when the illuminance or the illuminance sharply decreases.

When the temporal change in the illuminance or the illuminance does not indicate that the vehicle has entered the low-illuminance section, the ECU 10 ends this switching restriction condition determination process. When the temporal change in the illuminance or the illuminance indicates that the vehicle has entered the low-illuminance section, the ECU 10 proceeds to step S41.

In step S41, the ECU 10 determines that the switching restriction condition is satisfied. Thereafter, the ECU 10 ends this switching restriction condition determination process. The ECU 10 may assume that the switching restriction condition is satisfied for a certain period of time after the vehicle enters the low-illuminance section.

FIG. 4B is a flowchart illustrating a fourth example of the switching restriction condition determination process. As illustrated in FIG. 4B, first, in step S50, the ECU 10 determines whether or not the vehicle has entered the low-illuminance section based on the image recognition result of the visible light image by the switching restriction condition determination unit 12. Specifically, the switching restriction condition determination unit 12 detects features of a tunnel entrance or an indoor parking lot based on the recognition result of the visible light image analyzed by the image processing unit 13, and determines that the vehicle has entered the low-illuminance section.

When the image recognition result of the visible light image does not indicate that the vehicle has entered the low-illuminance section, the ECU 10 ends this switching restriction condition determination process. When the image recognition result of the visible light image indicates that the vehicle has entered the low-illuminance section, the ECU 10 proceeds to step S51.

In step S51, the ECU 10 determines that the switching restriction condition is satisfied. Thereafter, the ECU 10 ends this switching restriction condition determination process. The ECU 10 may assume that the switching restriction condition is satisfied for a certain period of time after the vehicle enters the low-illuminance section.

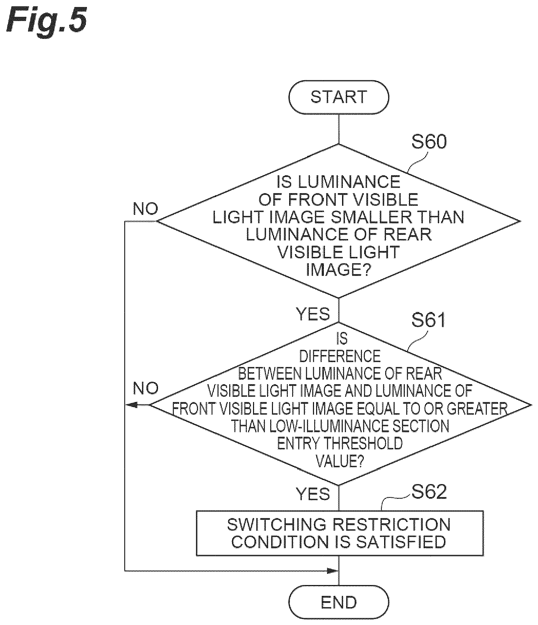

FIG. 5 is a flowchart illustrating a fifth example of the switching restriction condition determination process. As illustrated in FIG. 5, first, in step S60, the ECU 10 determines whether or not the illuminance of the front visible light image is smaller than the illuminance of the rear visible light image by the switching restriction condition determination unit 12. Specifically, the switching restriction condition determination unit 12 compares the illuminance of the front visible light image acquired from the first front camera 1a with the illuminance of the rear visible light image acquired from the first rear camera 1b, and determines whether or not the illuminance of the front visible light image is smaller than the illuminance of the rear visible light image.

When the illuminance of the front visible light image is not smaller than the illuminance of the rear visible light image, the ECU 10 ends this switching restriction condition determination process. When the illuminance of the front visible light image is smaller than the illuminance of the rear visible light image, the ECU 10 proceeds to step S61.

In step S61, the ECU 10 determines whether or not the difference between the illuminance of the rear visible light image and the illuminance of the front visible light image is equal to or greater than the low-illuminance section entry threshold value by the switching restriction condition determination unit 12. Specifically, the switching restriction condition determination unit 12 calculates the illuminance difference between the front visible light image and the rear visible light image, and determines whether or not the difference is equal to or greater than the low-illuminance section entry threshold value.

When the difference between the illuminance of the rear visible light image and the illuminance of the front visible light image is not equal to or greater than the low-illuminance section entry threshold value, the ECU 10 ends this switching restriction condition determination process. When the difference between the illuminance of the rear visible light image and the illuminance of the front visible light image is equal to or greater than the low-illuminance section entry threshold value, the ECU 10 proceeds to step S62.

In step S62, the ECU 10 determines that the switching restriction condition is satisfied. Thereafter, the ECU 10 ends this switching restriction condition determination process. The ECU 10 may assume that the switching restriction condition is satisfied for a certain period of time after determining that the difference between the illuminance of the rear visible light image and the illuminance of the front visible light image is equal to or greater than the low-illuminance section entry threshold value.

The image recording system 100 according to the present embodiment described above does not switch the recording target from the visible light image to the infrared image under specific conditions. The condition is that even when the illuminance around the vehicle or the illuminance of the visible light image becomes less than the infrared switching threshold value, the switching restriction condition is satisfied based on at least one of the current time, the position information and the map information of the vehicle, the temporal change in the illuminance, the temporal change in the illuminance, and the image recognition result of the visible light image. By this control, it is possible to suppress unnecessary switching of the recording target image in the low-illuminance section, which occurred in the conventional determination using only the illuminance sensor. Accordingly, even when the vehicle passes through a low-illuminance section such as inside a tunnel or an indoor parking lot, consistency of recorded images can be maintained, and accuracy of analysis and confirmation can be improved. Further, it is possible to prevent delay or frame drop due to switching to the infrared image, and suppress occurrence of a problem that makes it difficult to identify an object or a person.

Further, according to the image recording system 100, when the switching restriction condition is satisfied when the current time is before the sunset time or when the current time is included in the daytime period, unnecessary switching to the infrared image during bright daytime hours can be suppressed. Accordingly, recording of the visible light image is prioritized, and consistency of images can be maintained, so that accuracy of analysis and confirmation can be improved. Further, even during bright daytime hours, by preventing switching to the infrared image under specific conditions, quality of recorded images can be maintained, and useful information can be provided to the user.

Further, according to the image recording system 100, when it is determined that the vehicle has entered the low-illuminance section from the position information and the map information of the vehicle, the switching restriction condition is satisfied, whereby unnecessary image switching can be prevented. Accordingly, even in a low-illuminance environment such as inside a tunnel or an indoor parking lot, recording of the visible light image can be continued, and consistency of recorded images can be maintained.

Further, according to the image recording system 100, when it is determined that the vehicle has entered the low-illuminance section based on the temporal change in the illuminance or the temporal change in the illuminance, the switching restriction condition is satisfied, whereby unnecessary image switching can be avoided. Accordingly, even in a low-illuminance section such as a tunnel or an indoor parking lot, recording of the visible light image can be continued, and consistency of recorded images can be maintained.

Further, according to the image recording system 100, when it is determined that the vehicle has entered the low-illuminance section based on the image recognition result of the visible light image, the switching restriction condition is satisfied, whereby unnecessary image switching can be avoided. Accordingly, even in a low-illuminance environment such as inside a tunnel or an indoor parking lot, recording of the visible light image can be continued, and consistency of recorded images can be maintained. Furthermore, by using image recognition technology, the low-illuminance section can be determined more accurately even in a situation where determination is difficult only with the illuminance sensor or the position information. Therefore, more reliable image recording can be realized.

Further, the image recording system 100 can use the visible light camera 1 including the first front camera 1a that captures an image of the front of the vehicle and the first rear camera 1b that captures an image of the rear of the vehicle. In this case, it can be determined that the switching restriction condition is satisfied when the illuminance of the front visible light image is smaller than the illuminance of the rear visible light image, and the difference between the illuminance of the front visible light image and the illuminance of the rear visible light image is equal to or greater than the low-illuminance section entry threshold value. According to the image recording system 100, unnecessary switching to the infrared image can be suppressed based on the difference between the illuminance of the front visible light image and the illuminance of the rear visible light image when entering the low-illuminance section such as a tunnel or an indoor parking lot, and recording of the visible light image can be continued. Regarding the above points, similar effects can also be obtained in a vehicle including the image recording system 100 according to the present embodiment, a program that causes the ECU 10 of the vehicle to operate as the image recording system 100, and the image recording method of the image recording system 100.

Although the embodiments of the present disclosure have been described above, the present disclosure is not limited to the above-described embodiments. The present disclosure can be implemented in various forms obtained by making various changes and improvements to the above-described embodiments based on the knowledge of those skilled in the art.

The image recording system 100 may determine whether or not the switching restriction condition is satisfied based on at least one of the current time, the position information of the vehicle, the map information, the temporal change in the illuminance, the temporal change in the illuminance, and the image recognition result of the visible light image. The image recording system 100 does not necessarily need to perform determination using the current time. When determination using the current time is not performed, it is not necessary to acquire the current time, the sunset time, the daytime period, and the like.

The image recording system 100 does not necessarily need to perform determination using the position information of the vehicle. When the image recording system 100 does not perform determination using the position information of the vehicle, it does not need to include the GNSS receiving unit 4 and the map database 5. The same applies to the temporal change in illuminance, the temporal change in illuminance, and the image recognition result of the visible light image.

Note that the image recording system 100 may first recognize that it is daytime using the current time. Thereafter, the switching restriction condition may be determined using the temporal change in illuminance, the temporal change in illuminance, the image recognition result of the visible light image, the difference between the illuminance of the front visible light image and the illuminance of the rear visible light image, or the like. That it is daytime can be recognized from information on the current time, the sunset time, and the daytime period. Accordingly, it is possible to avoid erroneously determining that the vehicle has entered the low-illuminance section when exiting from a brightly lit parking lot or the like at nighttime.

The image recording system 100 does not necessarily need to perform the determination process of whether or not the switching restriction condition is satisfied. As another aspect, the image recording system 100 may consider the switching restriction condition to be satisfied, for example, when the current time is before the sunset time. In this case, the recording target of the image recording unit 6 is not switched from the visible light image to the infrared image. The same applies when the position information and the map information of the vehicle, the temporal change in illuminance, the temporal change in illuminance, the image recognition result of the visible light image, or the like are used.

## Claims

1. An image recording system comprising:
an infrared camera (2) mounted on a vehicle and configured to capture an image of a surrounding environment of the vehicle using infrared light;
a visible light camera (1) mounted on the vehicle and configured to capture an image of the surrounding environment of the vehicle using visible light; and
an image recording unit (6) configured to record either an infrared image captured by the infrared camera (2) or a visible light image captured by the visible light camera (1),
wherein the image recording system switches a recording target of the image recording unit (6) from the visible light image to the infrared image when illuminance around the vehicle detected by an illuminance sensor (3) of the vehicle or illuminance of the visible light image becomes less than an infrared switching threshold value in a case where the recording target of the image recording unit (6) is the visible light image, and
wherein, even if the illuminance around the vehicle or the illuminance of the visible light image becomes less than the infrared switching threshold value, the image recording system does not switch the recording target of the image recording unit (6) from the visible light image to the infrared image when a preset switching restriction condition is satisfied based on at least one of a current time, position information and map information (5) of the vehicle, a temporal change in the illuminance, a temporal change in the illuminance, and an image recognition result of the visible light image.

2. The image recording system according to claim 1, wherein the switching restriction condition is satisfied when the current time is before a preset sunset time, or when the current time is included in a preset daytime period.

3. The image recording system according to claim 1, wherein the map information (5) includes a low-illuminance section including a tunnel, and
the switching restriction condition is satisfied when it is determined that the vehicle has entered the low-illuminance section based on the position information and the map information (5) of the vehicle.

4. The image recording system according to claim 1, wherein the switching restriction condition is satisfied when it is determined that the vehicle has entered a low-illuminance section based on the temporal change in the illuminance or the temporal change in the illuminance.

5. The image recording system according to claim 1, wherein the switching restriction condition is satisfied when it is determined that the vehicle has entered a low-illuminance section based on the image recognition result of the visible light image.

6. The image recording system according to claim 1, wherein the visible light camera (1) includes a first front camera (1A) configured to capture an image of a front side of the vehicle and a first rear camera (1B) configured to capture an image of a rear side of the vehicle, and
the switching restriction condition is satisfied when illuminance of a front visible light image captured by the first front camera (1A) is smaller than illuminance of a rear visible light image captured by the first rear camera (1B), and a difference between the illuminance of the rear visible light image and the illuminance of the front visible light image is equal to or greater than a low-illuminance section entry threshold value.

7. A vehicle comprising:
an infrared camera (2) configured to capture an image of a surrounding environment using infrared light;
a visible light camera (1) configured to capture an image of the surrounding environment using visible light; and
an image recording unit (6) configured to record either an infrared image captured by the infrared camera (2) or a visible light image captured by the visible light camera (1),
wherein the vehicle switches a recording target of the image recording unit (6) from the visible light image to the infrared image when illuminance around the vehicle detected by an illuminance sensor (3) of the vehicle or illuminance of the visible light image becomes less than an infrared switching threshold value in a case where the recording target of the image recording unit (6) is the visible light image, and
wherein, even if the illuminance around the vehicle or the illuminance of the visible light image becomes less than the infrared switching threshold value, the vehicle does not switch the recording target of the image recording unit (6) from the visible light image to the infrared image when a preset switching restriction condition is satisfied based on at least one of a current time, position information and map information (5) of the vehicle, a temporal change in the illuminance, a temporal change in the illuminance, and an image recognition result of the visible light image.

8. A program that causes a computer mounted on a vehicle to operate, the vehicle including an infrared camera (2) configured to capture an image of a surrounding environment of the vehicle using infrared light, a visible light camera (1) configured to capture an image of the surrounding environment of the vehicle using visible light, and an image recording unit (6) configured to record either an infrared image captured by the infrared camera (2) or a visible light image captured by the visible light camera (1), the program causing the computer to:
switch a recording target of the image recording unit (6) from the visible light image to the infrared image when illuminance around the vehicle detected by an illuminance sensor (3) of the vehicle or illuminance of the visible light image becomes less than an infrared switching threshold value in a case where the recording target of the image recording unit (6) is the visible light image; and
not switch the recording target of the image recording unit (6) from the visible light image to the infrared image when a preset switching restriction condition is satisfied based on at least one of a current time, position information and map information (5) of the vehicle, a temporal change in the illuminance, a temporal change in the illuminance, and an image recognition result of the visible light image, even if the illuminance around the vehicle or the illuminance of the visible light image becomes less than the infrared switching threshold value.

9. An image recording method of an image recording system, the image recording system including an infrared camera (2) mounted on a vehicle and configured to capture an image of a surrounding environment of the vehicle using infrared light, a visible light camera (1) mounted on the vehicle and configured to capture an image of a surrounding environment of the vehicle using visible light, and an image recording unit (6) configured to record either an infrared image captured by the infrared camera (2) or a visible light image captured by the visible light camera (1), the method comprising:
switching, by the image recording system, a recording target of the image recording unit (6) from the visible light image to the infrared image when illuminance around the vehicle detected by an illuminance sensor (3) of the vehicle or illuminance of the visible light image becomes less than an infrared switching threshold value in a case where the recording target of the image recording unit (6) is the visible light image; and
not switching, by the image recording system, the recording target of the image recording unit (6) from the visible light image to the infrared image when a preset switching restriction condition is satisfied based on at least one of a current time, position information and map information (5) of the vehicle, a temporal change in the illuminance, a temporal change in the illuminance, and an image recognition result of the visible light image, even if the illuminance around the vehicle or the illuminance of the visible light image becomes less than the infrared switching threshold value.
